# EUROPEAN PATENT APPLICATION

(11) **EP 0 936 819 A2**
(43) Date of publication of application: **18.08.1999**
(21) Application number: 99300956.2
(22) Date of filing: 10.02.1999
(51) Int. Cl.: H04N 9/804

(54) **Digital recording and reproducing apparatus**

(30) Priority: 13.02.1998 JP 3083898; 13.02.1998 JP 3083998
(71) Applicant: HITACHI, LTD., Chiyoda-ku, Tokyo (JP)
(72) Inventor: Fujita, Kouji, Totsuka-ku, Yokohama-shi (JP); Nishijima, Hideo, Hitachinaka-shi (JP); Moro, Eiji, Hitachinaka-shi (JP)
(74) Representative: Calderbank, Thomas Roger

(57) **Abstract**

In the digital recording, the recording quality can be changed in accordance with the kind of signal content, the easy-to-handle ability is better, and the economy of the recording medium is considered. The compressor (100) is set for an arbitrary fixed compression rate in accordance with the contents of the digital signal or the rate is made variable with the upper limit fixed. In addition, the remaining amount of recording medium is detected, and the remaining recording time is calculated.

## Description

The present invention relates to a digital recording and reproducing apparatus that not only records/ reproduces digital video/audio signals, but also digitizes analog video/audio signals and records them on a recording medium, thereafter reproducing the digital signals from the medium, then decoding them into the original analog video/ audio signals.

In the home digital recording and reproducing apparatus, for example, a digital VTR using 6-mm width magnetic tape, the analog video and audio signals supplied through the input ends are replaced by equivalent digital signals and recorded with the picture quality maintained high. In this case, in order that the consumption of the tape can be reduced for long-time recording, the video and audio signals are digitized and further high-efficiency encoded (data is compressed) so that the amount of data can be decreased. For example, in the above home digital VTR that is now commercially available, the amount of information of video signal is compressed to about 1/5 (25 Mbps) as large as the original size and then recorded on the magnetic tape.

An example of recording video and audio signals as compressed digital information on a magnetic tape or magnetooptical disk is disclosed in JP-A-8-9330.

However, the compressing means used in the home digital VTR compresses data at a constant rate (for example, 25 Mbps). Therefore, the recording time is also constant, and data can be recorded only for two hours on a roll of the magnetic tape intended for digital recording. In addition, when a television signal is received and recorded, it is always recorded at the same compression rate irrespective of the kind of programs, and thus there is much wastefulness. Thus, the conventional digital VTR lacks enough economy of tape consumption and consideration of whether the user can easily handle.

It is an object of the invention to provide a recording and reproducing apparatus having better economy of tape consumption and satisfactory easy-to-handle ability.

In order to achieve the above object, according to one aspect of the invention, there is provided a digital recording and reproducing apparatus having compressor means for compressing digital video and audio signals at an arbitrary compression rate into compressed data according to the signal contents, and a digital recorder for recording the compressed data on a recording medium.

The compressor means has a fixed compression rate setting unit capable of setting for an arbitrary fixed compression rate.

The compressor means may have a variable compression rate setting unit for changing the compression rate according to the input video and audio signals, and an upper-limit compression rate setting unit for setting the upper limit of the compression rate.

The compressor means may have a fixed compression rate setting unit capable of setting an arbitrary fixed compression rate, a remaining recording medium detector for detecting the remaining amount of the recording medium, and means for changing the fixed compression rate according to the result of detecting the remaining recording medium and to the scheduled recording time.

The compressor means may have a fixed compression rate setting unit capable of setting an arbitrary fixed compression rate, a remaining recording medium detector for detecting the residual amount of the recording medium, and a arithmetic operator for calculating the remaining recording time of the recording medium on the basis of the result of detecting the remaining recording medium and the fixed compression rate.

The recording medium may be a magnetic tape or disk-like recording medium.

The apparatus may have a digital input terminal for the compressed data.

The apparatus may have receiving means for receiving analog video and audio signals.

Also, according to another aspect of the invention, there is provided a digital recording and reproducing apparatus having both digital signal recorder/ reproducer and analog signal recorder/reproducer, the digital signal recorder/reproducer having a digital receiver for receiving digital video and audio signals and an information signal, an analog/digital converter for converting the analog video and audio signals into digital video and audio signals, a compressor for compressing the digital video and audio signals into compressed data, an expander for expanding the compressed data into the original video and audio signals, a digital/analog converter for converting the digital video and audio signals into the original analog video and audio signals, digital recording means for recording the digital data or the compressed data on a recording medium, and a digital reproducer for reproducing the digital data or the compressed data from the recording medium, the analog signal recorder/reproducer having an analog receiver for receiving a video signal of analog video and audio signals and an information signal, an analog recorder for recording the video signal on the recording medium, an analog reproducer for reproducing the video signal from the recording medium, and a discriminator for discriminating if the reproduced signal from the recording medium is digital or analog.

The apparatus may have demodulator means for demodulating the information signal, and a compression rate changer for changing the compression rate of the compressor means according to the result of demodulating the information signal.

The apparatus may have memory means for storing the compressed data, a memory detector for detecting the amount of data stored in the memory means, and a controller for controlling the recording medium to start and stop the recording/reproduction on the basis of the result of detecting the amount of data in the memory.

The apparatus may have means for multiplexing the information signal produced from the analog receiver and the compressed data.

In addition, according to further aspect of the invention, there is provided a digital recording and reproducing apparatus having an analog/digital converter for converting analog video and audio signals into a digital video and a digital audio signal, a compressor for compressing the digital video and audio signals into compressed data, an expander for expanding the compressed data into the digital video and audio signals, a digital/ analog converter for converting the digital video and audio signals into the original analog video and audio signals, a digital recorder for recording the compressed data on a recording medium, and a digital reproducer for reproducing the compressed data from the recording medium, the compressor having an intraframe compressor, an interframe compressor, and means for increasing the intraframe compression data rate.

### In the drawings

Fig. 1 is a block diagram of the construction of a digital recording and reproducing apparatus according to a first embodiment of the invention.

Fig. 2 is a block diagram of the construction of a video data compressor according to a second embodiment of the invention.

Fig. 3 is a block diagram of the construction of a digital recording and reproducing apparatus according to a third embodiment of the invention.

Fig. 4 is a graph showing the operation of the digital recording and reproducing apparatus of the third embodiment of the invention.

Fig. 5 is a block diagram of the construction of a digital recording and reproducing apparatus according to a fourth embodiment of the invention.

Fig. 6 is a block diagram of the construction of a digital recording and reproducing apparatus according to a fifth embodiment of the invention.

Fig. 7 is a block diagram of the construction of a digital of a digital recording and reproducing apparatus according to a sixth embodiment of the invention.

Fig. 8 is a block diagram of the construction of a digital receiver.

Fig. 9 is a diagram showing the data format of a digital television broadcast.

Fig. 10 is a block diagram of the construction of a video/audio digital I/F 10.

Fig. 11 is a block diagram of the construction of a digital recording and reproducing apparatus according to seventh embodiment of the invention.

Fig. 12 is a block diagram of the construction of another digital recording and reproducing apparatus according to the seventh embodiment of the invention.

Fig. 13 is a block diagram of the construction of a digital recording and reproducing apparatus according to a eighth embodiment of the invention.

Fig. 14 is a block diagram of the construction of a digital recording and reproducing apparatus according to a ninth embodiment of the invention.

The processing of video and audio signals in each embodiment of the invention will be described with reference to the accompanying drawings.

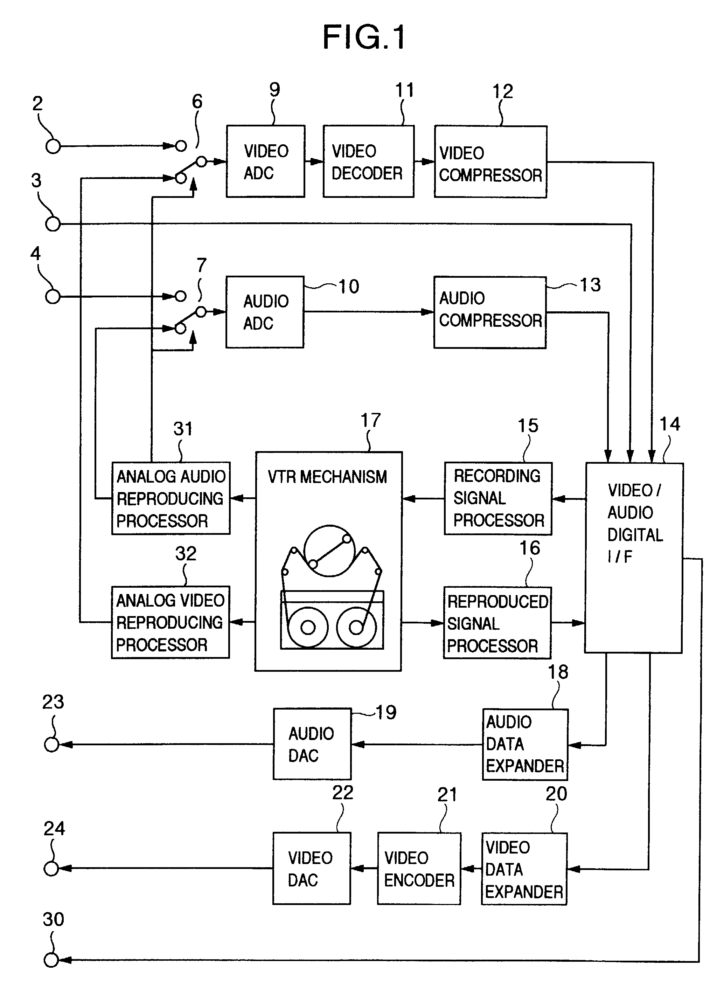

Fig. 1 is a block diagram of the construction of a digital recording and reproducing apparatus according to a first embodiment of the invention.

Referring to Fig. 1, there are shown an analog video signal input terminal 2, a digital signal input terminal 3, an analog audio signal input terminal 4, switch circuits 6, 7, an analog/digital converter 9 for a video signal, an analog/digital converter 10 for an audio signal, a video decoder 11, a video data compressor 12, an audio data compressor 13, a video/audio digital interface 14, a recording signal processor 15, a reproduced signal processor 16, a VTR mechanism-17, an audio data expander 18, a digital/analog converter 19 for an audio signal, a video data expander 20, a video encoder 21, a digital/ analog converter 22 for a video signal, an audio signal output terminal 23, a video signal output terminal 24, and a digital output terminal 30.

The operation of the first embodiment will be described with reference to Fig. 1.

An analog video signal supplied from the video signal input terminal 2 is fed through the switch circuit 6 to the video signal purpose analog/digital converter (hereinafter, video ADC) 9, and converted thereby into a digital video signal. This digital video signal is converted by the video decoder 11 into digital data in accordance with, for example, ITU-R, BT. 601 (International Telecommunication Union, Radio Communication Center), and fed to the video data compressor 12. The video signal converted into digital data is high-efficiency encoded by the video data compressor 12 in accordance with, for example, MPEG2 (Moving Picture Experts Group 2) encoding process, and fed to the video/audio digital interface 14. The input signal to the video input terminal 2 is a video signal from a television broadcast receiver (not shown) or a video camera.

An analog audio signal supplied from the audio input terminal 4 is fed through the switch circuit 7 to the audio-signal analog/digital converter (hereinafter, ADC) 10, and converted into a digital audio signal. The digital audio signal is high-efficiency encoded by the audio data compressor 13 in accordance with, for example, MPEG2 encoding process. The compressed audio data is fed to the video/audio digital interface 14.

The video/audio compressed data into which audio and video signals are already compressed is supplied from the digital input terminal 3, and fed directly to the video/audio digital interface 14.

The video/audio digital interface 14 converts the compressed video data, the compressed audio data and an information signal (for example, recording data and time, time code, and comments on recording source) into a one-channel data stream, which is then supplied to the recording signal processor 15.

The recording signal processor 15 converts the one-channel data stream into such a recording signal as to conform to the recording medium. The converted signal is recorded on a magnetic tape by the VTR mechanism 17.

The VTR mechanism 17 is a helical scan type VTR, in which the magnetic tape is wrapped around a rotating drum, and scanned obliquely by the magnetic heads mounted on the rotating drum so that data or analog video/audio signals are recorded or reproduced on/from the magnetic tape.

While the magnetic tape is used as a recording medium in this embodiment, the recording medium is not limited to the magnetic tape, but may be a disk-like medium.

The reproduced signal obtained from the magnetic tape by the VTR mechanism 17 is converted by the reproduced signal processor 16 into the original one-channel data stream, and fed to the video/audio digital interface 14. The one-channel data stream is separated by the video/audio digital interface 14 into video compressed data and audio compressed data, which are fed to the video signal expander 20 and audio signal expander 18, respectively.

The video signal expander 20 and audio signal expander 18 execute digital expansion operation in accordance with, for example, MPEG2 (Moving Picture Experts Group 2) to produce video and audio digital data.

The video digital data is converted back into the luminance signal and chrominance signal (hereinafter, YC signal) by the video encoder 21, and converted by the video-signal digital/analog converter (hereinafter, video DAC) 22 into the analog signal, which is then produced from the output terminal 24.

The audio digital data is converted by the audio-signal digital/analog converter (hereinafter, audio DAC) 19 into the analog audio signal, which is then produced from the output terminal 23.

In addition, the VTR mechanism 17 can record/ reproduce analog video and audio signals on the magnetic tape as well as it does the compressed video/audio digital signals. For example, the analog audio and video signals can be recorded or reproduced in the same format as in the conventional analog VHS video recorder or analog 8 mm video recorder.

Moreover, the compressed video/audio digital signal and the analog video/audio signals can be recorded together in a mixed manner on the same magnetic tape.

The analog video signal reproduced from the VTR mechanism 17 is supplied to an analog video reproducing processor 32, where it is demodulated into the original analog video signal. Then, the original analog video signal is fed through the switch circuit 6 to the video ADC 9.

The analog audio signal reproduced from the VTR mechanism 17 is demodulated by an analog audio reproducing processor 31 into the original analog audio signal. The original analog signal is then supplied through the switch circuit 7 to the audio ADC 10.

The digital video signal produced from the video ADC 9 is converted by the video decoder 11 into digital data in accordance with, for example, ITU-R BT. 601 (International Telecommunication Union, Radio Communication Center). The digital data is fed to the video data compressor 12, where it is high-efficiency encoded in accordance with, for example, MPEG2 (Moving Picture Experts Group 2). Then, the compressed video data is supplied to the video/audio digital interface 14.

The digital audio signal produced from the audio ADC 10 is high-efficiency encoded by the audio data compressor 13 in accordance with, for example, MPEG2. The compressed audio data is fed to the video/audio digital interface 14.

The video/audio digital interface 14 converts the compressed video data and audio data, and an information signal (for example, recording date and time, time code, and comments on recording source) into a one-channel data stream, which is produced from the output terminal 30.

With the arrangement, according to the first embodiment, the video and audio signals reproduced from the conventional analog signal recorded magnetic tape (VHS video tape, 8-mm video tape) can be converted into bit-compressed digital data, and then outputted to outside.

Thus, according to the first embodiment, the analog video and audio signals supplied from outside or from a television receiver can be encoded into digital signals in accordance with MPEG2 and recorded/reproduced on/from the magnetic tape. When the input signal is already a digital signal compressed in accordance with MPEG2, the digital signal can be recorded directly on the magnetic tape as it is. That is, both digital video/audio signal and analog video/audio signal can be processed by this digital recording and reproducing apparatus. While the compressor and expander of MPEG2 are used in the first embodiment, different type of compressor/expander may be used.

In addition, by outputting the compressed digital video/audio signal to outside, it can be dubbed on the tape of another digital recording and reproducing apparatus having the same interface as does this apparatus. Recently microprocessors have been improved in performance, and the capacity of the memory/hard disks have been much increased, which in turn has improved the performance of personal computers greatly, thereby making it possible to easily handle compressed digital video/audio signals on the personal computers. Consequently, it is very effective to use a personal computer so as to easily edit and process a compressed digital video/audio signal outputted from the digital recording and reproducing apparatus.

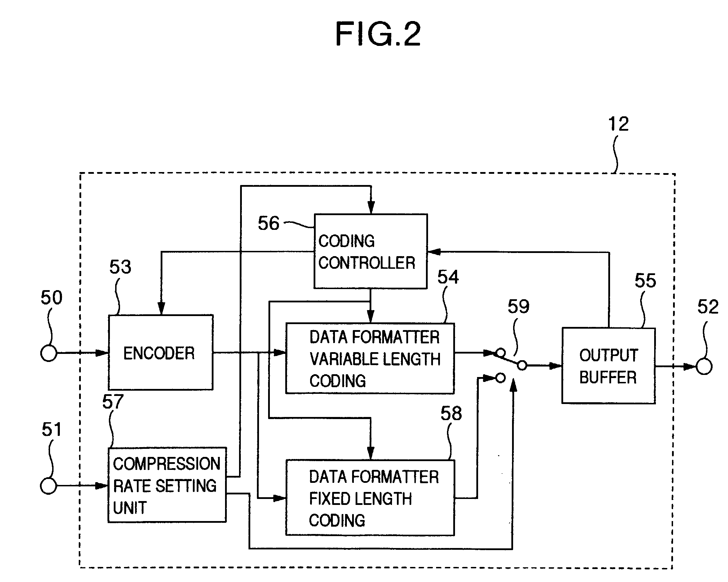

A second embodiment of a digital recording and reproducing apparatus according to the invention will be described below. Fig. 2 is a block diagram of the video compressor 12 according to the second embodiment. Referring to Fig. 2, there are shown an input terminal 50 to which non-compressed digital video data is applied, a control input terminal 51 for setting the compression rate, an output terminal 52 for compressed digital video data, an information encoder 53 for compressing data, a data format generator 54 for formatting variable length data after compression, an output buffer 55 that stores therein compressed video data and produces the compressed video data when it reaches a predetermined value, a coding controller 56 for assigning the amount of codes and setting quantization parameters, a compression rate setting unit 57, a data format generator 58 for formatting fixed-length data after compression, and a switch circuit 59.

While the operation according to MPEG data compression system will be described below, this embodiment is not limited to this compression system. Before the description of the operation of the compressor, compression of video information will be mentioned first. For example, in the MPEG compression system, video data consists of three-picture information: intraframe coded information (I picture), interframe coded information (P picture) obtained by the prediction from the past, and interframe coded information (B picture) obtained by the prediction from the past and future. One unit of certain numbers of I, P and B pictures is called GOP (Group of Picture).

The I, P and B pictures are generated by the following three compression means:
(1) Compression of information using spatial correlation,
(2) Compression of information using temporal (time) correlation, and
(3) Compression of information using deviation of code appearance probability when coding by the above two compression methods.

In the compression of information using spatial correlation at (1) above, a single video frame is divided into certain blocks of pixels and each block is processed in accordance with DCT transform (Discrete Cosine Transform), thereby decomposing the single video frame into frequency components. After the DCT conversion, the DCT coefficients are divided by a certain value, rounded off and quantized. The compression rate can be increased with the increase of the divisor, but the quality of video image is reduced by deleting the higher frequency components of video information. In other words, if the divisor is constant, the compression rate is constant (compression rate fixed). The quality of video image can be improved by adaptively changing the divisor (compression rate made variable) in accordance with the picture information.

In the compression of information using the temporal (time) correlation at (2) above, the pattern information before and after the video image are very similar in most cases. Thus, if only the change (motion vector) of the pattern is treated as information, the amount of video information to be transmitted can be greatly reduced.

Finally, in the compression of information using the deviation of the rate of appearance of code at (3) above, codes of short length are assigned to the DCT coefficients and motion vectors of high-rate appearance, and codes of long length to those of low-rate appearance. Consequently, the amount of average information can be reduced. This operation is called variable length coding.

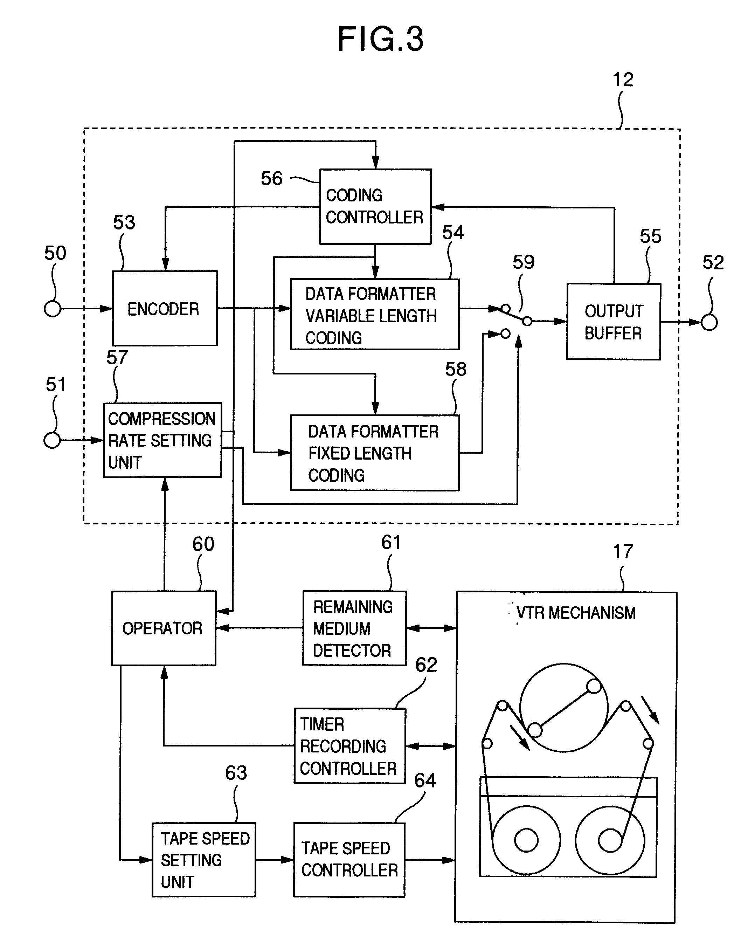

The above video compression processings are performed by the video data compressor 12 shown in Figs. 2 and 3.

The operation of the video data compressor 12 will be described with reference to Fig. 3.

The digital video data fed from the input terminal 50 is supplied to the information encoder 53. The information encoder 53 carries out DCT conversion, quantization of information and extraction of motion vector to compress the amount of information. The compressed and coded data is supplied to the data format generator 54. The data format generator 54 makes compression of information according to the deviation of appearance rate of compressed code. Therefore, the compressed data (variable length code) that is different in code length depending on picture pattern, is transmitted to the switch circuit 59.

The compressed data transmitted through the switch circuit 59 is fed to the output buffer 55 and produced at the terminal 52. Each time a certain amount of data is stored in the output buffer 55, a trigger signal is transmitted to the coding controller 56, controlling the timing for coding.

The coding controller 56 sets the assignment of amount of codes to the I, P and B pictures and the quantization parameter, and supplies control signals to the information encoder 53 and data format generator 54.

The compressed data produced at the terminal 52 after the above coding operation has the average data rate of, for example, 6 Mbps, and adaptively changes its data rate from 12 Mbps, maximum to 4 Mbps, minimum according to picture pattern of the video source.

The data format generator 54 can set the upper data rate for the variable length coding. Thus, the video source can be high-efficiency coded with high picture quality.

The fixed length coding will be described. The fixed length coding is the means for coding information to have a fixed data rate irrespective of picture pattern of the video source. When the amount of data after coding is smaller than a specified amount of data, invalid data is added to the coded data. If the amount of data after coding is larger than the specified amount of data, the picture quality after coding is lowered so that the data rate can be always kept to be a fixed value.

The above fixed length coding is made by the data format generator 58 shown in Fig. 2.

The setting of compression rate in the above compression means will be described with reference to Fig. 2. The set compression rate is selected by the user or compression rate information is multiplexed with the vertical blanking period of a video signal or with a digital television broadcast program. This compression rate information is fed through the terminal 51 to the compression rate setting unit 57. The compression rate setting unit 57 sends video compression parameter set information to the coding controller 56.

The coding controller 56 sets the amount of code to be assigned to each of the I, P and B pictures and the quantization parameter. The information encoder 53 and the data format generators 54, 58 generate compressed data in accordance with the specified compression rate. While the compression rate setting process in the video data compressor 12 has been described, the audio data compressor 13 is also able to set the compression rate similarly.

According to the second embodiment, the video data compressor 12 and audio data compressor 13 each have two means of variable length compression means by variable length coding and fixed length compression means by fixe length coding. Therefore the compression rate can be arbitrarily set by the user or according to the system information.

The data format generator 54 for variable length coding is able to set the upper limit of the compression rate at the time of variable length coding. Thus, the compression operation can be effectively made according to the video source.

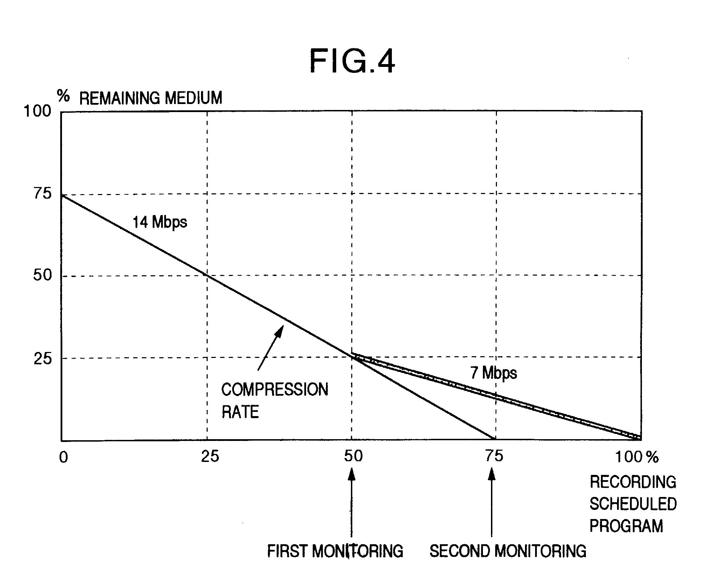

A third embodiment of a digital signal recording and reproducing apparatus according to the invention will be described with reference to Figs. 3 and 4.

This embodiment can solve, for example, the problem that under a specified compression rate, the capacity of the recording medium is not enough as compared with the time of the program to be recorded.

In Fig. 3, like function blocks corresponding to those in Fig. 2 are identified by the same reference numerals, and will not be described in detail. Referring to Fig. 3, there is shown an arithmetic operator 60 that decides if all programs to be recorded can be recorded completely from the remaining capacity of the recording medium, the remaining time for recording, and the compression rate presently being specified. If the recording is decided to be impossible, the arithmetic operator calculates the compression rate under which the recording can be done on the remaining capacity of the recording medium, and sends the calculated rate to the compression rate setting unit 57.

There are also shown a remaining capacity detector 61 for detecting the amount of the remaining capacity of the recording medium, a timer controller 62 for controlling the start and end at specified times, a tape speed setting unit 63 for determining the transport speed of magnetic tape as a recording medium, and a tape speed controller 64.

The remaining capacity detector 61 detects the present amount of remaining tape, and converts this amount into a remaining recording capacity value, which is then transmitted to the arithmetic operator 60.

The timer controller 62 transmits the scheduled recording time information to the arithmetic operator 60.

The arithmetic operator 60 decides if all programs to be recorded can be recorded completely from the remaining capacity of the recording medium, the remaining time for recording, and the compression rate presently being specified. If the recording is decided to be impossible, the operator 60 calculates the compression rate under which the recording can be done for all the scheduled recording time, and transmits the obtained rate to the compression rate setter 57.

The arithmetic operator 60 then computes the tape speed in accordanced with the changed compression rate, and send it to the tape speed setting unit 63.

The magnetic tape speed setting unit 63 calculates a servo parameter necessary for the tape speed controller from the tape speed information, and sends it to the tape speed controller 64, causing the controller to change the tape speed. Instead of lowering the tape speed, the magnetic tape may be intermittently driven.

A specific example of the above operation will be described with reference to Fig. 4. Fig. 4 is a graph showing the amount of remaining tape with respect to recording time in the timer operation. In this graph, the abscissa indicates the reserved recording time expressed in percent, and the ordinate shows the amount of remaining capacity of tape expressed in percent. The magnetic tape to be used in the timer recording starts recording under the compression data rate of 14 Mbps at the position where the tape capacity has already consumed 25% of the whole tape capacity. The tape ends at the time point of 75% of the whole recording time.

This embodiment controls the magnetic tape not to stop at a point within the scheduled recording time, but stop just at the end of the scheduled recording time. For example, at the 50% point (the first monitoring point) of the scheduled recording time, decision is made of if the program to be recorded can be completely recorded at the end of the scheduled recording time from the presently specified compression rate, the amount of remaining tape and the remaining time of the reserved program.

If it is decided that the tape will end at a some point in time during the reserved program recording, the present compression rate is reduced to, for example, half (for example, 7 Mbps).

The tape speed is lowered to, for example, half in accordance with the change of the compression rate, or controlled to intermittently stop and normally move so that the amount of tape consumption can be decreased. The above first monitoring point may be provided at a plurality of positions. The end of the recording can be approached to the tape end by providing a plurality of monitoring points.

According to the third embodiment, the data compression rate and tape transport speed can be changed according to the remaining amount of recording medium, reserved recording time and present compression rate, so that the timer recording can be prevented from being stopped at some point in time during recording.

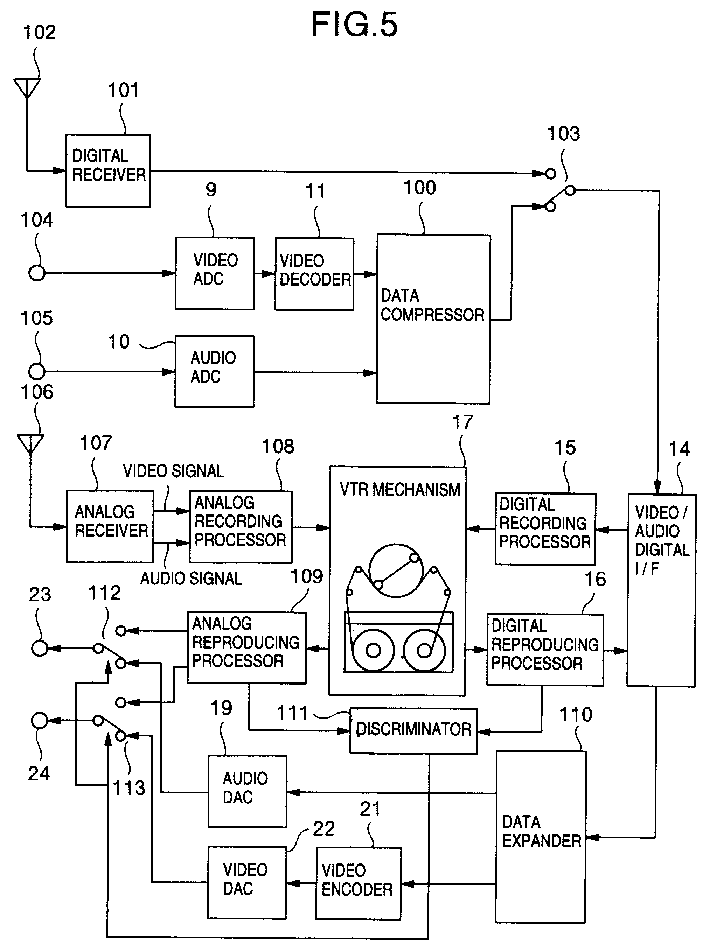

Fig. 5 is a block diagram of the construction of a recording and reproducing apparatus according to a fourth embodiment. In Fig. 5, like function blocks corresponding to those in Fig. 1 are identified by the same reference numerals, and will not be described. Referring to Fig. 5, there are shown a digital compressor 100, a digital receiver 101, a digital broadcast receiving antenna 102, a switch circuit 103, a video signal input terminal 104, an audio signal input terminal 105, an analog signal receiving antenna 106, an analog receiver 107, an analog recording processor 108, an analog reproducing processor 109, a data expander 110, a discriminator 111, and switch circuits 112 to 113.

The analog video signal is supplied through the video signal input terminal 104 to the video signal analog/ digital converter (hereinafter, video ADC) 9, and converted thereby into a digital video signal. This digital video signal is further converted by the video decoder 11 into digital data conforming to ITU-R BT. 601 (International Telecommunication Union, Radio Communication Center). Then, the digital data is high-efficiency encoded by the data compressor 100 in accordance with, for example, MPEG2. The output from the data compressor 100 is transmitted through the switch circuit 103 to the video/audio digital interface 14.

The analog audio signal is supplied through the audio signal input terminal 105 to the audio signal analog/ digital converter (hereinafter, audio ADC) 10, and converted thereby into a digital audio signal. This digital audio signal is supplied to the data compressor 100, where it is high-efficiency encoded in accordance with, for example, MPEG2 to produce compressed digital audio data. This compressed digital audio data is transmitted through the switch circuit 9 to the video/audio digital interface 14. The digital signal from the data compressor 100 is a digital multiplex signal that has the video signal and audio signal to be transmitted on one channel in a time sharing (division) manner.

The flow of the received digital television broadcast signal will be described. The digital broadcast signal received by the digital broadcast receiving antenna 102 undergoes channel selection and demodulation process in the digital receiver 101 to produce a time-division multiplex signal of high-efficiency encoded audio and video signals in accordance with, for example, MPEG2.

This time-division multiplex digital signal is transmitted through the switch circuit 103 to the video/ audio digital interface 14. The switch circuit 103 selects one of the video/audio signal from the digital receiver and the external video/audio signal.

The recording on and reproduction from the recording medium will be described below.

Here, the recording medium is a magnetic tape (for example, VHS tape, 8-mm tape or 6-mm tape) by way of example. The recording medium is not limited to the magnetic tape, but may be an optical disk, hard disk or semiconductor memory.

The VTR mechanism 17 is a helical scan type VTR in which the magnetic tape is wrapped around a rotating drum, and obliquely scanned by the magnetic heads that are mounted on the rotating drum to do recording and reproducing.

The compressed video data and audio data in the video/audio digital interface 14 are added with error correction codes and multiplexed with system information, such as recording date and time, time code, title of program other than video and audio signals. The video/ audio digital interface 14 transmits this multiplex signal on one channel to the digital recording processor 15, which modulates this signal into a recording signal to make it recordable on the magnetic tape. The modulated signal is supplied to the VTR mechanism 17 by which it is recorded as digital data on the magnetic tape.

The reproducing operation will be described. The digital signal reproduced from the magnetic tape by the VTR mechanism 17 is demodulated into the original digital multiplex data by the digital reproducing processor 12, and supplied to the video/audio interface 14. The video/audio digital interface 14 error-corrects the digital multiplex data, and then decodes it into the compressed video data and audio data, and the system information. The compressed video data is transmitted from the interface 14 to the data expander 110, where it is expanded into digital video data in accordance with, for example, MPEG2 and to conform to ITU-R BT. 601. The output from the expander 110 is transmitted to the video encoder 21. The video encoder 21 converts it into the digital video signal. This signal is fed to the video digital/analog converter (hereinafter, DAC) 22. The output from the DAC is supplied through the switch circuit 113 to the output terminal 24, from which the analog video signal is produced.

The compressed audio data is expanded through, for example, MPEG2 by the data expander 110 to produce time-base expanded digital audio data. This expanded data is supplied to the audio digital/analog converter (hereinafter, DAC) 19. The audio DAC 19 converts the expanded digital audio data into an analog audio signal, and supplies it through the switch circuit 112 to the audio signal output terminal 23.

A description will be made of the recording and reproduction of analog video and audio signals on the same recording medium, for example, VHS tape. An analog television broadcast signal is received by the antenna 106, and demodulated by the analog receiver 107 into analog audio and video signals. The analog video and audio signals are fed to the analog recording processor 108. The analog recording processor 108 modulates those signals into a recording signal so as to make them recordable on the magnetic tape by the VTR mechanism 17. The recording signal is supplied to the VTR mechanism 17 by which the analog video and audio signals can be recorded on the magnetic tape.

The reproduction of analog video and audio signals from the tape will be described below. The reproduced signal from the VTR mechanism 17 is supplied to the analog reproducing processor 109, and demodulated thereby into the original analog video and audio signals, which are then supplied through the switch circuits 112, 113 to the video output terminal 23 and audio output terminal 24.

If the analog signals are recorded in the same format as on the conventional analog signal recorded VHS tape, this apparatus can be made compatible with the conventional VHS tape. The fourth embodiment of the invention is able to record and reproduce both analog video/audio signal and digital video/audio signal on the same magnetic tape. The magnetic tape is not limited to the VHS tape, but may be 8-mm tape or 6-mm tape.

A description will be made of the reproduction of analog video and audio signals and digital video and audio signals on the same magnetic tape.

It is necessary that the digital and analog reproducing processors be switched depending on whether the signal reproduced from the magnetic tape is digital or analog. The digital recording and analog recording are discriminated and switched as described below.

In the fourth embodiment, at the time of, for example, digital recording, a digital discrimination signal (that belongs to the above-mentioned information signal) is recorded on the tape in a multiplex manner. At the time of reproduction, the digital discrimination signal is detected by the discrimination processor 111, and the detected output from the processor 111 causes the switch circuits 112, 113 to operate.

The above discrimination operation is not limited to the digital discrimination signal recorded on the tape, but may be other means such as detection of the synchronizing signal pattern of digital recorded data or detection of the frequency band of the reproduced signal.

The fourth embodiment has receivers for digital and analog television signals, and is capable of recording both digital and analog television signals on the same recording medium (here, VHS tape). The digital recording and analog recording are discriminated by the reproduced signal. The conventional analog video/audio reproducing processor and the digital video/audio reproducing processor (that expands the high-efficiency coded audio/video signal through, for example, MPEG2) can be switched. In addition, since it has a high-efficiency encoder for coding analog video and audio signals through MPEG2, the analog video and audio signals fed from outside can be recorded in a digital form. While the compression and expansion through MPEG2 are applied in this embodiment, other types of compressor may be used without limiting to MPEG2.

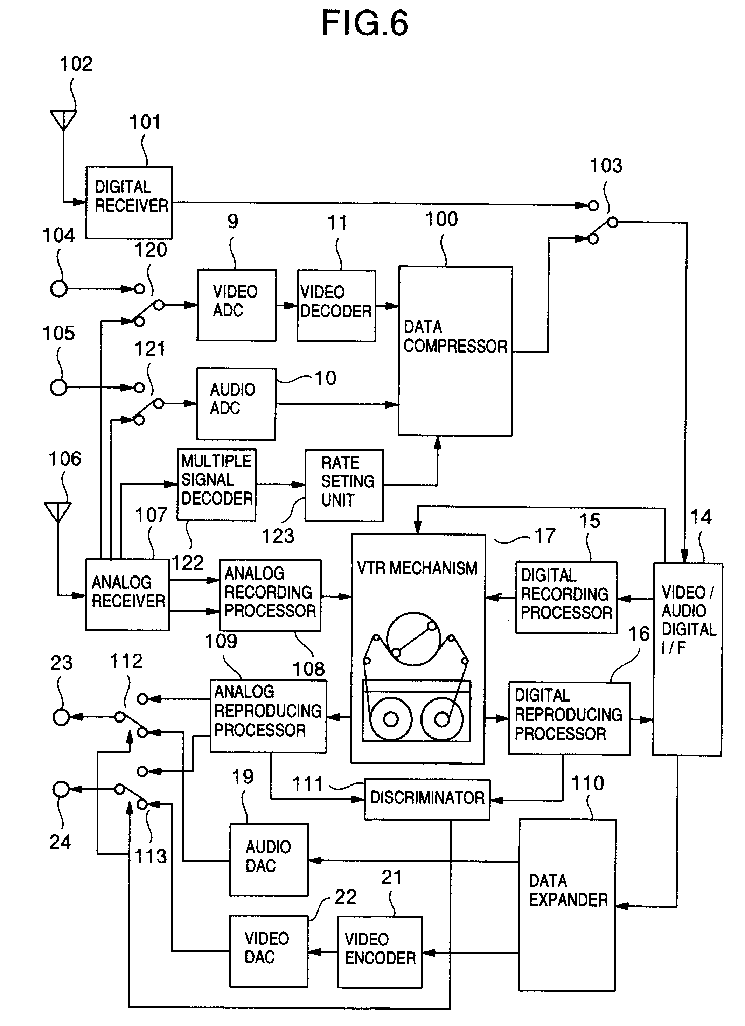

A fifth embodiment of a digital signal recording and reproducing apparatus according to the invention will be described with reference to Fig. 6. In Fig. 6, like elements corresponding to those in the first embodiment are identified by the same reference numerals, and will not be described in detail.

Referring to Fig. 6, there are shown input change-over switch circuits 120, 121, a multiplex decoder 122 for decoding digital information (for example, digital information contained in the vertical blanking period of the video signal) multiplexed on the video signal, and a compression rate setting unit 123. A feature of the fifth embodiment is to have a function capable of setting an arbitrary compression rate when the video and audio signals are compressed. That is, the compression rate can be determined according to the digital information multiplexed on the television signal, and the digital signal can be compressed according to the compression rate, and recorded.

The analog video/audio signals produced from the receiver 107 are fed to switch circuits 120, 121, and converted into digital signals high-efficiency coded according to, for example, MPEG2.

The received analog video/audio signal from the analog receiver 107 is also fed to the multiplex signal decoder 122, which decodes the digital information signal included in the vertical blanking period of the video signal. The digital information signal contains recommended recording rate setting information for each program, such as 12 Mbps for sport program or 4 Mbps for news program. The rate setting unit 123 determines the compression rate of the data compressor 100 according to this recommend information.

Moreover, the digital information signal may be an information signal containing kinds of program (for example, music program, sport program, movie program or news program). The user can decide the recording rate for each kind of program.

According to the fifth embodiment, since the compression rate can be automatically changed according to the information signal contained in the television signal, appropriate compression rate and picture quality can be automatically selected according to the program. Also, the compression rate can be set for each kind of program that is selected by the user. As a result, the program of news or the like can be recorded on the recording medium under a lower value of the compression rate, for example, 4 Mbps, and the program of sport or music containing fast motions can be recorded on the recording medium under a higher value of the compression rate, for example, 12 Mbps. That is, the recording medium can be effectively used for recording under different compression rates.

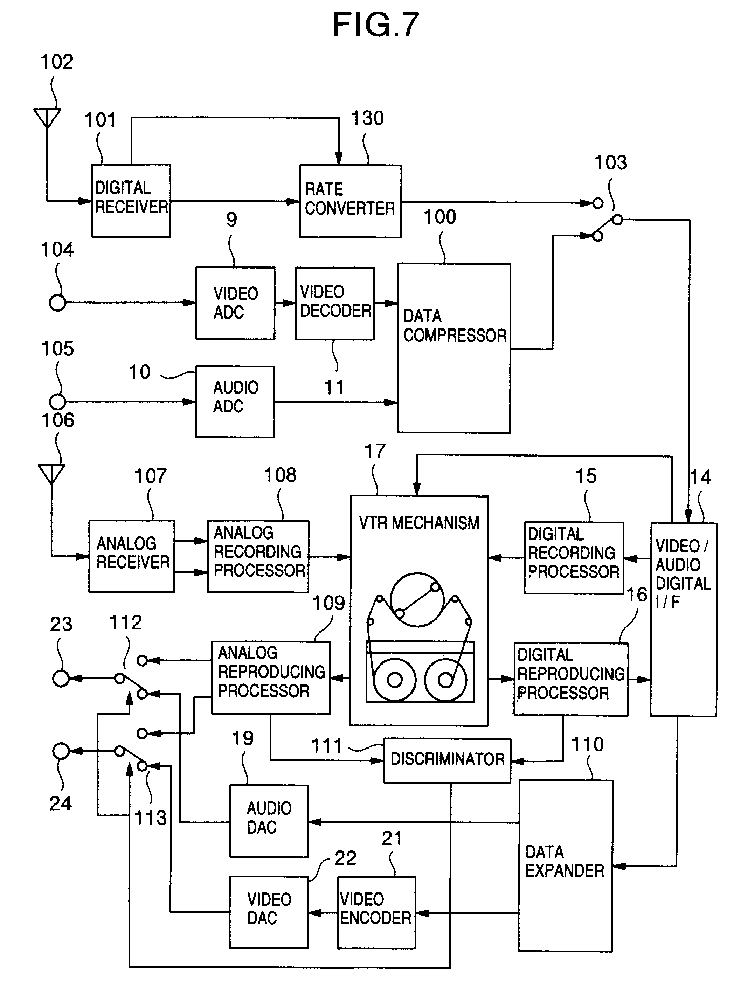

The sixth embodiment of a digital signal recording and reproducing apparatus according to the invention will be described with reference to Fig. 7. In the sixth embodiment, the data rate of the digital video and audio signals is converted into an arbitrary value according to the information signal that contains a recommended recording rate signal and that is included in the digital television broadcast, and the digital signals are recorded under this data rate on the recording medium (here, VHS tape). In Fig. 7, like elements corresponding to those in the first embodiment are identified by the same reference numerals, and will not be described in detail.

Referring to Fig. 7, there is shown a rate converter 130 that has a function to further compress the input digital video/audio data at a compression rate and produce it. This means can be achieved by once expanding the compressed digital video/audio data and then again compressing the information at a set compression ratio. It may be attained by use of the means for decimating the number of video frames.

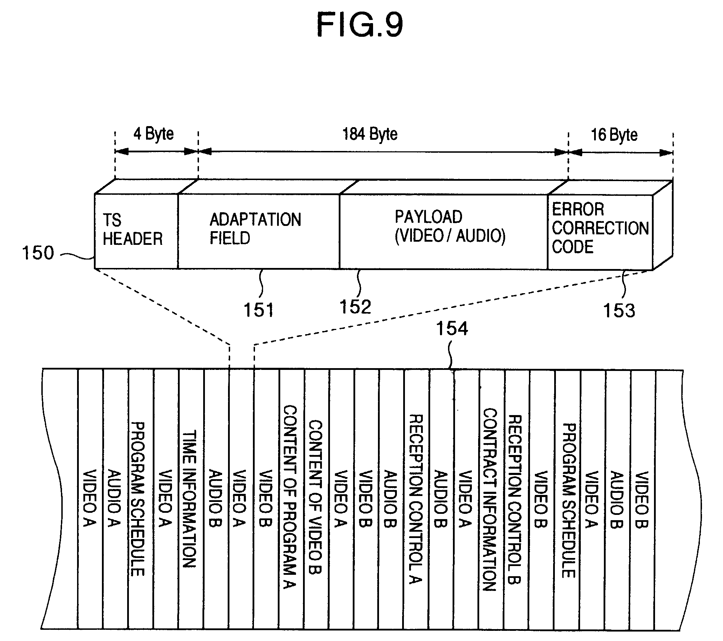

The data format of the digital television broadcast will be described with reference to Fig. 9. The data of a digital broadcast is formed of predetermined groups of data (packets), and the data length of each packet is 204 bytes. The packet has a TS header 150 indicating the head of the packet, an adaptation field 151 indicating additional information about an individual stream, a payload 152 indicating video/audio/service information, and an error correction code 153. The packets of 204 bytes each are multiplexed in a time sharing manner to form a sequence of a multiplex stream such as video A, video B, audio A, audio B, program content, time information, program schedule, reception control A, and reception control B.

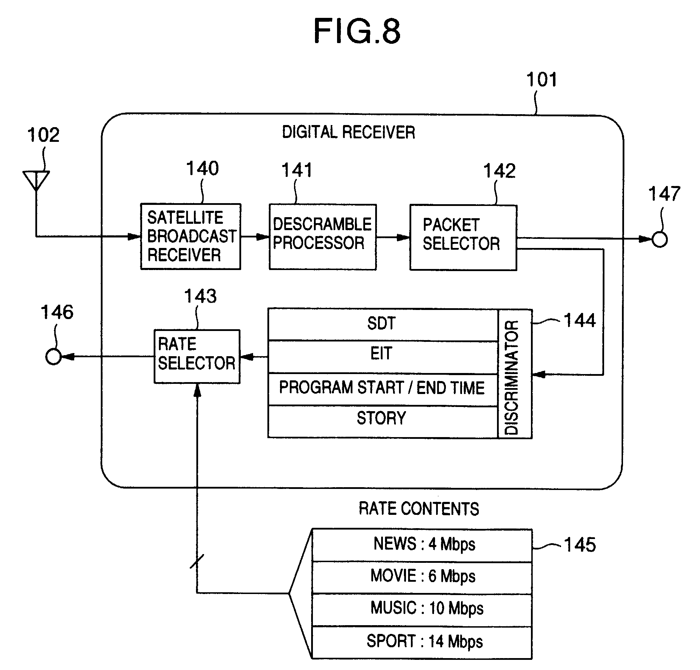

Fig. 8 shows the construction of the television receiver. Referring to Fig. 8, there are shown a digital satellite broadcast receiver 140 (capable of receiving digital terrestrial wave broadcast), a descramble processor 141, a packet selector 142, a rate selection signal generator 143, an information discriminator 144 for discriminating information within the packet, and a rate setting content 145.

The satellite broadcast receiver 140 receives a digital television broadcast, and supplied it to the descramble processor 141 where the received signal is descrambled. The packet selector 142 selects a program which the user desires or a packet corresponding to an information program, and produces the digital video/audio data from an output terminal 147. Also, the additional information is supplied to the discriminator 144. The digital broadcast contains a distinctive program guide that has SDT (Service Description Table: channel numbers), EIT (Event Information Table: titles of program), program start time/end time, and story of programs. The reception control packet shown in Fig. 9 contains, for example, kinds of programs (news, movies, music, and sport) or recording rate information for each broadcast program. The discriminator 144 sorts these kinds of programs. If the user sets a particular recording rate for each of the kinds of programs shown at the rate setting content 145 in Fig. 8, the set signal is transmitted to the rate selector 143, and the corresponding recording rate setting signal is produced from an output terminal 146. While the user selects a recording rate for each kind of programs as described above, the recording rate setting signal can be automatically produced from the output terminal 146 irrespective of the selection by the user when the recording rate for each program is contained in the reception control packet.

Then, it is necessary to change the recording data rate of the VTR mechanism 17 when the recording data rate is altered. Since the VTR mechanism 17 has a fixed recording rate, the recording data rate is apparently changed. For this purpose, for example, the tape speed is lowered or the tape is intermittently driven as described below.

The tape is caused to start and stop by the video/audio digital I/F 14.

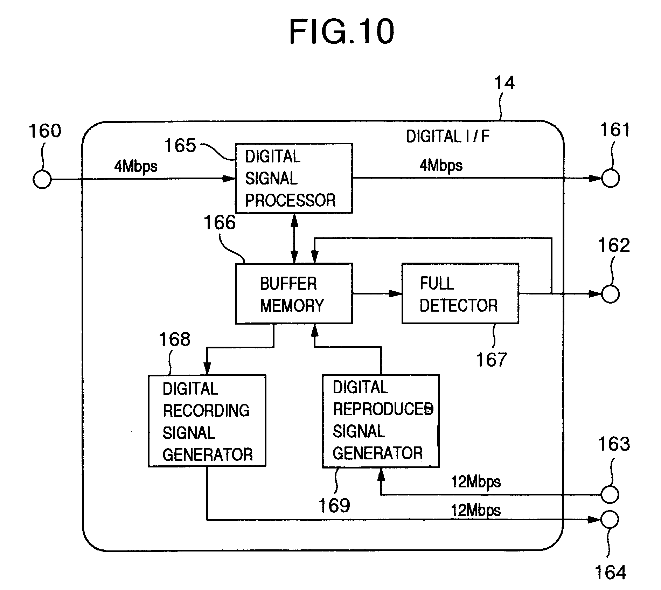

The construction of the video/audio digital I/F 14 will be described with reference to Fig. 10.

Referring to Fig. 10, there are shown a digital video/audio data input terminal 160, a digital video/audio data output terminal 161, an output terminal 162 for a tape-start/stop signal, an input terminal 163 for a reproduced digital signal, an output terminal 164 for an recording digital signal, a digital signal processor 165, a buffer memory 166 for temporarily storing digital video/ audio data, a FULL detector 167 for detecting the filled state of the buffer memory 166, a digital recording signal generator 168, and a digital reproduced signal generator 169.

When digital video/audio data is supplied at a data rate of, for example, 4 Mbps from the input terminal 160 to the video/audio digital I/F 14, the recording operation is performed as described below.

The data rate at which the VTR mechanism 17 records and reproduces data is assumed to be 12 Mbps. The digital video/audio data of 4 Mbps is sequentially stored in the buffer memory 166. The FULL detector 167 detects that the buffer memory has reached the full state, and supplies a tape start/stop signal from the output terminal 162. At the same time, the FULL detector 167 orders the buffer memory 166 to send the digital data to the digital recording signal generator 168. All the data in the buffer memory 166 is recorded, and then the buffer memory 166 is caused to again start the storing operation.

The reproducing operation is intermittently performed as is the recording operation. Although the data rate of the VTR mechanism 17 is apparently reduced by the start/stop operation of the magnetic tape, this embodiment is not limited to this system.

According to the sixth embodiment, since the received digital video/audio data can be recorded at a compression rate different from that received according to the information contained in the television signal of the digital broadcast, the recording medium can be effectively used.

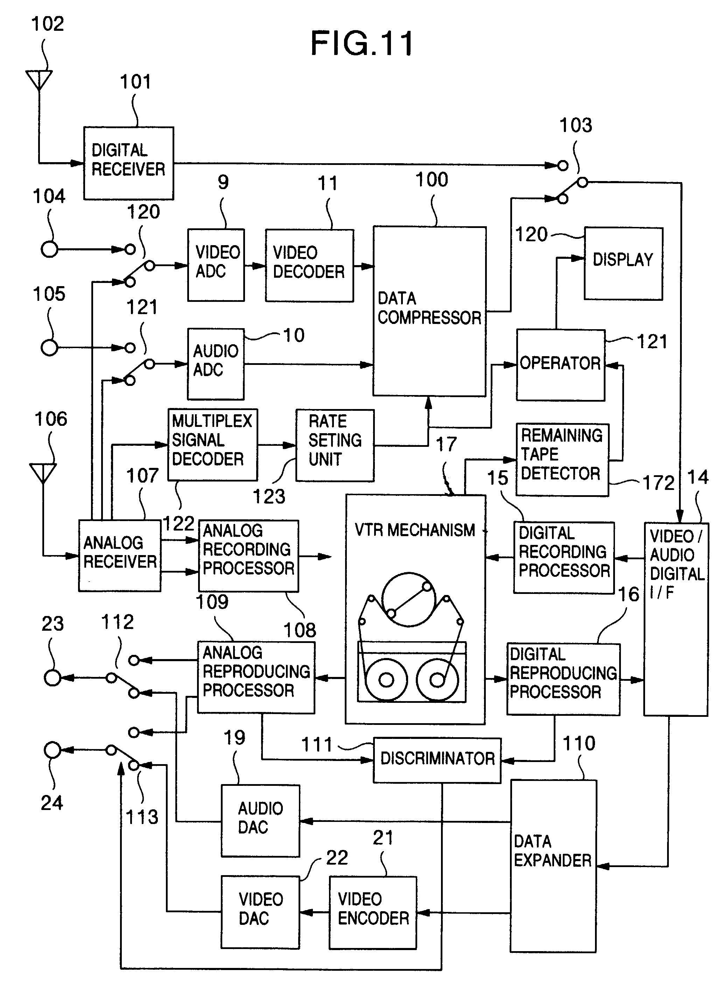

A seventh embodiment of a digital recording and reproducing apparatus according to the invention will be described with reference to Fig. 11. In Fig. 11, like elements corresponding to those in the first embodiment are identified by the same reference numerals, and will not be described in detail.

Referring to Fig. 11, there are shown a display 170 for displaying the remaining tape recording time with respect to compression rate, an arithmetic operator 171 for calculating the remaining tape recording time with respect to compression rate from the compression rate information and remaining amount of tape, and a remaining tape detector 172.

The seventh embodiment of the invention has the function to display on the display 170 the remaining tape recording time according to the recording data rate of the data compressor 100, thereby notify the user of this fact. The remaining tape detector 172 in Fig. 11 can calculate the remaining amount of tape from the tape transport speed of the VTR mechanism 17 and the angular velocity information of the take-up reel and supply reel. The calculated information of remaining amount of tape is sent to the arithmetic operator 171.

The compression data rate set by the compression rate setter 123 is transmitted to the arithmetic operator 171. The remaining recording time is calculated from the remaining amount of tape and compression data rate. The calculated remaining recording time is indicated on the display 170. The seventh embodiment can be applied to the sixth embodiment.

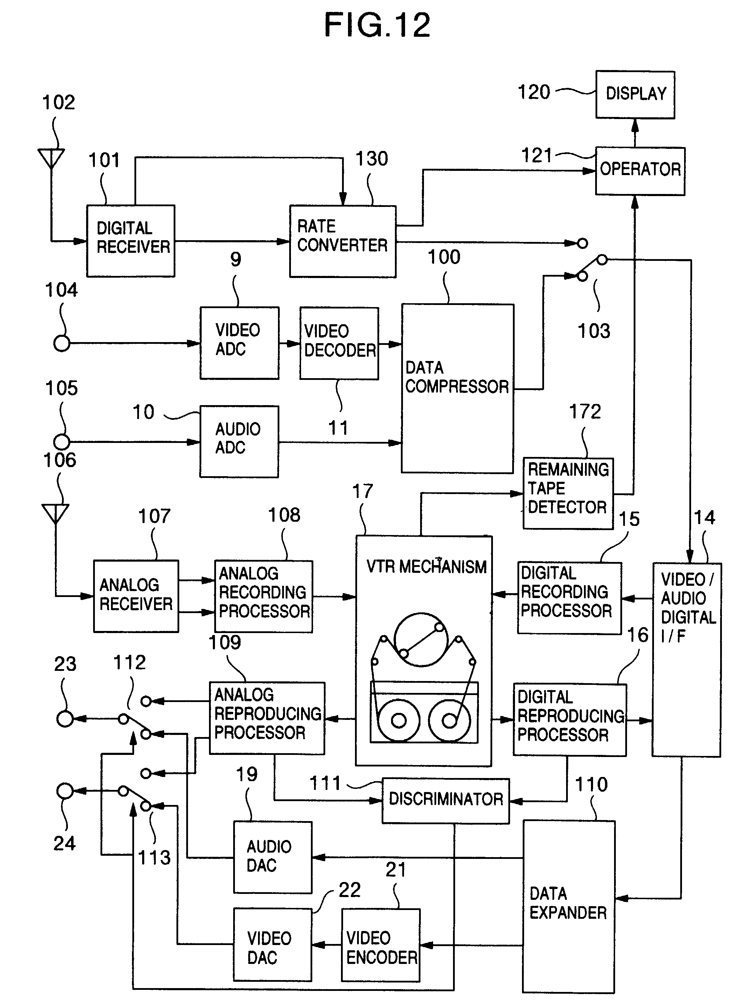

Fig. 12 shows the arrangement of the application of the seventh embodiment to the sixth embodiment. The recommended recording data rate contained in the information signal received by the digital receiver 101 is supplied to the data rate converter 130. The rate converter 130 supplies the recording data rate to the arithmetic operator 171. The remaining tape information is detected by the remaining tape detector 172, and sent to the arithmetic operator 171. The remaining tape information is detected by the detector 172 and fed to the operator 171. The remaining recording time is calculated from the remaining tape information and compression data rate information. The remaining recording time is indicated on the display 170.

The seventh embodiment is able to display the remaining tape recording time according to the compression recording data rate, and improve the ease with which the user handles the apparatus.

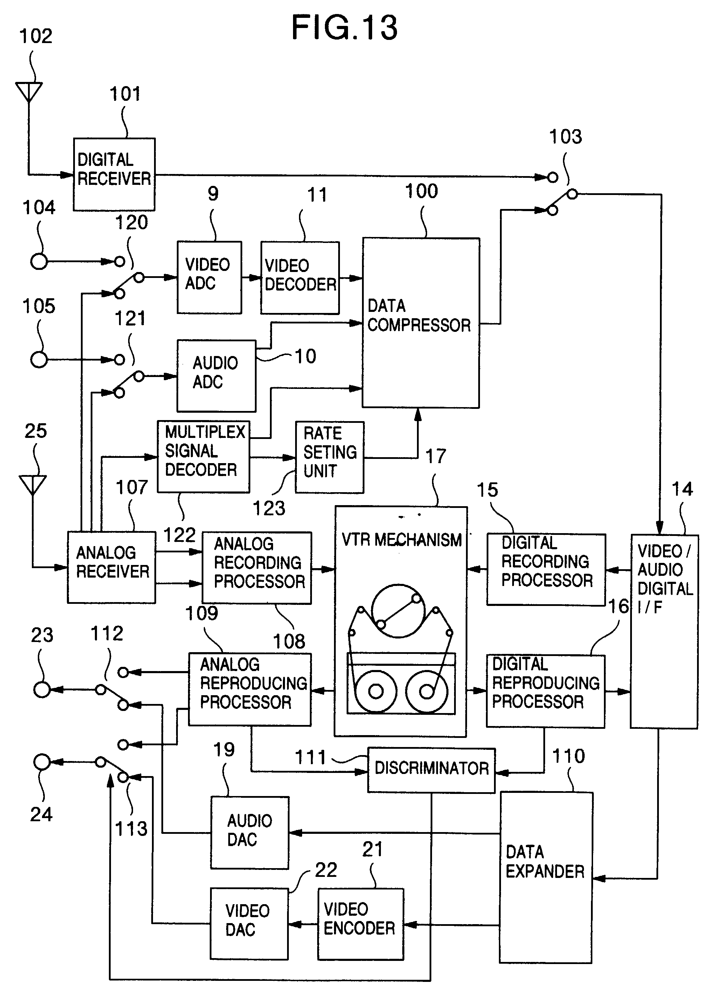

An eighth embodiment of a digital signal recording and reproducing apparatus according to the invention will be described with reference to Fig. 13. Fig. 13 is a bock diagram of the construction of the digital signal recording and reproducing apparatus of this embodiment. In Fig. 13, like elements corresponding to those in Fig. 11 are identified by the same reference numerals, and will not be described in detail.

The analog television signal to be broadcasted has a digital information signal contained in the vertical blanking period. The analog television signal contains, for example, caption information, weather forecast information, and stock price information. The eighth embodiment proposes the digital recording and reproducing apparatus that records the above digital information signal multiplexed with the digital compressed data of video and audio signals.

The operation of this apparatus will be described with reference to Fig. 13.

The analog video/audio signal produced from the analog receiver 107 is supplied to the multiplex signal decoder 122, where it is demodulated into the digital information contained in the vertical blanking period of the video signal. The digital information is supplied to the data compressor 100. The data compressor 100 multiplexes the compressed digital video data and digital audio data, and the digital information data as a digital signal on a single channel. The digital signal is transmitted through the switch 103, video/audio digital interface 14 and digital recording processor 15, and recorded on the magnetic tape.

In reproducing operation, the above information signal is processed by the data expander 110 so that it can be displayed superimposed on the digital video signal, thus the user being able to watch the information signal together with the video information on the display.

In the eighth embodiment, as described above, the information signal contained in the vertical blanking period of the television signal produced from the analog receiver 107 can be demodulated into the digital signal, and recorded to be multiplexed with the digital video and audio signals in a time sharing manner, thus improving the ease with which the user handles the apparatus.

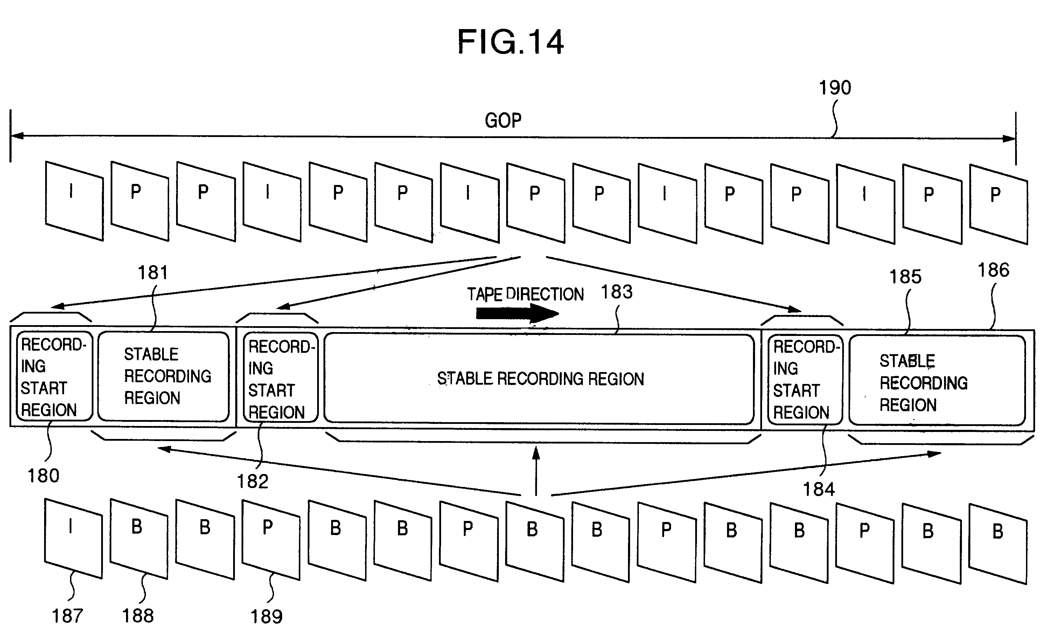

A ninth embodiment of a digital signal recording and reproducing apparatus according to the invention will be described with reference to Fig. 14. Fig. 14 is a diagram to which reference is made in explaining the video information compressing operation of this embodiment.

Here, the MPEG compression is utilized as an example. In the MPEG compression system, the video data is composed of three video information: intraframe coded information (I picture 187), interframe coded information (P picture 189) predicted from the past, and interframe coded information (B picture 188) predicted from the past and future. The I picture 187, P picture 189 and B picture 188 constitute a block (GOP 190) formed of a certain number of pictures.

In the MPEG compression system, one GOP 190 includes, for example, 10 B pictures 188, four P pictures 189, one I picture 187. Since the B, P pictures have video data not coded within the frame, it is necessary to create a single frame picture from the adjacent pictures located before and after or from the previous picture.

The I picture is intraframe coded information of video data, and hence can be displayed as it is. However, since the I picture has a large amount of information as compared with B, P picture, the rate of occupation of I picture within the GOP is generally reduced. Therefore, since it takes a certain time to produce a video image because of the property of the MPEG data, instantaneous production of image cannot be expected.

Thus, the ninth embodiment of the invention arbitrarily changes the proportions of I picture 187, P picture 189 and B picture 188 within the GOP 190 in the recording start region or certain region of the tape, thereby achieving instantaneous production of image at the same time as the tape starts to be reproduced.

Fig. 14 shows one example of the magnetic tape recorded by the ninth embodiment and the proportions of the I picture 187, P picture 189, B picture 188. In Fig. 14, at the center, there are shown regions 180 to 186 on the magnetic tape 186. In each of the regions 180+181, 182+183 and 184+185 is recorded three programs. The proportions of I picture 187, P picture 189, and B picture 188 in each of the regions 180 to 186 are the same GOP format that is formed of one I picture, ten B pictures, and four P pictures as illustrated on the underside of the magnetic tape 186. In this embodiment of the invention, since the GOP format of the recording start region 180, 182, 184 of each program includes five I pictures, 0 B picture and ten P pictures, the compression rate is increased, resulting in the reduction of the time from the tape reproducing start to video image production. If the data transfer speed and the capacity of the recording medium are permitted, the GOP can be filled only by I pictures, so that the image production time can be decreased. The GOP format is not limited to the above proportions, but may be any combination of those pictures.

The assignment of the amount of code to the I, B, P picture and the setting of quantization parameter are performed in the coding controller 56 of the video data compressor 12 as previously described with reference to Fig. 2. Therefore, the setting for increasing the compression rate can also be made in this coding controller 56.

Thus, according to the ninth embodiment, the image production time from the start of reproduction to the image production can be greatly reduced by increasing the proportions of I picture or P picture within the GOP in the recording start region or certain region of the magnetic tape.

While the above embodiments are given for explaining the invention, the present invention is not limited to those embodiments, but may be differently changed without departing from the scope of the invention. In addition, the structure of each part of the invention is not limited to the above embodiments, but may be modified in various ways within the scope of the invention.

While the digital signal recording and reproducing apparatus of each embodiment uses a magnetic tape as a recording medium, the recording medium may be a disk-like recording medium, such as a magnetooptical disk or hard disk.

The digital signal recording and reproducing apparatus of the invention, as described above, is able to encode analog video and audio signals or those produced from a television receiver into the MPEG2 format, and record those data on or reproduce from the magnetic tape. In addition, the digital signal in which the video and audio signals are already compressed and converted into the MPEG2 format can be recorded directly on the magnetic tape. That is, the digital signal recording and reproducing apparatus of the invention can handle both digital signal and analog signal.

Moreover, the apparatus of the invention is able to reproduce the conventional analog-recorded magnetic tape (VHS video tape, 8-mm video tape or the like), and convert the analog video and audio signals into digital data of MPEG2 format, which can be supplied to the outside of the apparatus so that those digital data can be dubbed with the picture quality little degraded.

Also, the video data compressor 12 and audio data compressor 13 each having two means of variable length compressing means for variable length coding and fixed length compressing means for fixed length coding are able to arbitrarily set the compression rate by the user or according to the system information.

In addition, the data format generator 54 for variable length coding is able to set the upper limit of the compression rate at the time of variable length coding, and efficiently make compression operation according to the video source.

In addition, the compression rate of data and tape speed can be changed according to the remaining medium information, reserved recording time information and present compression rate, thereby preventing the timer recording from being stopped on the way of recording.

Also, the analog and digital television signals produced from the receivers capable of receiving those signals can be recorded on the same recording medium (here, VHS tape). The digital recording and analog recording can be discriminated according to the reproduced signal so that the reproduction of the conventional analog video and audio signals and the reproduction of the digital video and audio signals (for example, the audio and video signals coded in MPEG2 with high efficiency are expanded) can be switched. In addition, the encoder for coding the analog video and audio signals in MPEG2 with high efficiency is provided to make it possible to digitally record the analog video and audio signals supplied from outside.

Moreover, the compression rate can be automatically changed according to the information signal contained in the television signal, and thus the appropriate compression rate and picture quality can be automatically selected according to the program. In addition, the compression rate can be set at each kind of program which the user selects. As a result, the news program can be recorded with the compression rate reduced to, for example, 4 Mbps, and the sport program or music program with fast motion can be recorded with the compression rate increased up to 12 Mbps, so that the recording medium can be effectively used.

In addition, the digital video and audio data can be recorded at a different compression rate from that of the received data according to the information contained in the digital broadcast television signal. Thus, the recording medium can be effectively used.

Moreover, since the remaining recording time of the magnetic tape can be displayed with respect to the compression recording data rate, the ease with which the user handles the apparatus can be improved.

Also, the information signal contained in the vertical blanking period of the television signal produced from the analog receiver 107 can be demodulated into a digital signal and recorded together with the digital video and audio signals in a time sharing manner, thus making it possible to improve the ease with which the user handles the apparatus.

Furthermore, the image production time from the reproduction operation can be-greatly reduced by increasing the proportion of the I picture or P picture within the GOP in the recording start region or certain region of the magnetic tape.

## Claims

1. A digital recording and reproducing apparatus comprising:
a compressor (12, 13, 100) for compressing digital video and audio signals at a compression rate arbitrarily set in accordance with the signal contents; and
a digital recorder (17, 15, 16, 14) for recording said compressed data on a recording medium.

2. A digital recording and reproducing apparatus according to claim 1, wherein said compressor has a fixed compression rate setting unit (58) for setting an arbitrary fixed compression rate.

3. A digital recording and reproducing apparatus according to claim 1, wherein said compressor has a variable compression rate setting unit (54) for changing said compression rate in accordance with said input video and audio signals, and for setting the upper limit of said compression rate.

4. A digital recording and reproducing apparatus according to claim 1, wherein said compressor has a fixed compression rate setting unit (58) for setting an arbitrary fixed compression rate, said apparatus further comprising:
a remaining recording medium detector (61) for detecting the remaining amount of said recording medium; and
an arithmetic operator (60) for changing said fixed compression rate in accordance with the result of detection of said remaining amount of said recording medium, and a scheduled recording time.

5. A digital recording and reproducing apparatus according to claim 1, wherein said compressor has a fixed compression rate setting unit (58) for setting an arbitrary fixed compression rate, said apparatus comprising:
a remaining recording medium detector (61) for detecting the remaining amount of said recording medium; and
an arithmetic operator (60) for calculating the remaining recording time of said recording medium from the result of detecting said remaining amount of said recording medium, and said fixed compression rate.

6. A digital recordihg and reproducing apparatus according to claim 1, wherein said recording medium is a magnetic tape or disk-like recording medium.

7. A digital recording and reproducing apparatus according to claim 1, further comprising a digital input terminal (3) for said compressed data.

8. A digital recording and reproducing apparatus according to claim 1, further comprising:
an analog reproducing processor (31, 32, 109) for processing reproduced analog video and audio signals from said recording medium having recorded thereon said analog video and audio signals; and
an analog/digital converter (9, 10) for converting said reproduced analog video and audio signals into a digital signal, said converted digital signal being supplied to said compressor.

9. A digital recording and reproducing apparatus comprising:
a digital receiver (101) for receiving a digital signal and an information signal associated therewith;
a compressor (100) for compressing said received digital video and audio signals at an arbitrarily set compression rate into compressed data in accordance with the signal contents; and
a digital recorder (17, 15) for recording said compressed data on said recording medium.

10. A digital recording and reproducing apparatus according to claim 9, further comprising:
a demodulator (122) for demodulating said information signal; and
a compression rate changer (123) for changing the compression rate of said compressor in accordance with the result of demodulating said information signal.

11. A digital recording and reproducing apparatus according to claim 9, further comprising:
a memory (166) for storing said compressed data;
a memory detector (167) for detecting the amount of data stored in said memory; and
a controller (14) for controlling said recording medium to start and stop the recording and reproduction operations based on the result of detecting the amount of data in said memory.

12. A digital recording and reproducing apparatus comprising:
a compressor (12, 13, 100) for compressing digital video and audio signals into compressed data at an arbitrarily set compression rate according to the signal contents; and
a digital recorder (17, 15) for recording said compressed data on a recording medium, said compressor having intraframe compressing means and interframe compressing means, said compressed data at a recording start position or end position of said recording medium being processed to increase the intraframe compression rate.
